# EUROPEAN PATENT SPECIFICATION

(11) **EP 4 405 454 B1**
(45) Date of publication and mention of the grant of the patent: **18.06.2025**
(21) Application number: 22789680.0
(22) Date of filing: 19.09.2022
(51) Int. Cl.: C12G 3/04, C12G 3/06

(54) **A SPIRIT DRINK**
SPIRITUOSE
BOISSON DE TYPE SPIRITUEUX

(30) Priority: 20.09.2021 IT 202100024098
(43) Date of publication of application: 31.07.2024
(73) Proprietor: Casa Savoia Ltd, London TW11 0DR (GB)
(72) Inventor: GALLO, Giuseppe, London W2 5EU (GB)
(74) Representative: Braidotti, Andrea
(86) International application number: PCT/IB2022/058832
(87) International publication number: WO 2023/042172

(56) References cited:
- FR-A- 1 269 626
- FR-A1- 2 651 792
- .: "REGULATION (EC) No 110/2008", OFFICIAL JOURNAL OF THE EUROPEAN UNION L 39/25, 13 February 2008 (2008-02-13), Strasbourg, France, pages 1 - 39, XP055503107, Retrieved from the Internet <URL:https://eur-lex.europa.eu/LexUriServ/LexUriServ.do?uri=OJ:L:2008:039:0016:0054:EN:PDF> [retrieved on 20180829]
- ANONYMOUS: "Regulation (EU) No 251/2014 of the European Parliament and of the Council on the definition, description, presentation labelling and the protection of geographical indications of aromatised wine products and repealing Council Regulation (EEC) No 1601/91", vol. L 84/14, 20 March 2014 (2014-03-20), pages 1 - 32, XP055915275, Retrieved from the Internet <URL:https://eur-lex.europa.eu/legal-content/en/TXT/?uri=CELEX:32014R0251>
- ANONYMOUS: "Aperol - Wikipedia", 4 April 2022 (2022-04-04), XP055915649, Retrieved from the Internet <URL:https://de.wikipedia.org/wiki/Aperol> [retrieved on 20220426]
- LIANG ZIJIAN ET AL: "The art of flavored wine: Tradition and future", TRENDS IN FOOD SCIENCE AND TECHNOLOGY, ELSEVIER SCIENCE PUBLISHERS, GB, vol. 116, 17 July 2021 (2021-07-17), pages 130 - 145, XP086813902, ISSN: 0924-2244, [retrieved on 20210717], DOI: 10.1016/J.TIFS.2021.07.020
- ANONYMOUS: "Kalte Ente - Wikipedia", 20 July 2021 (2021-07-20), XP055915695, Retrieved from the Internet <URL:https://de.wikipedia.org/wiki/Kalte_Ente> [retrieved on 20220426]

## Description

### FIELD OF THE TECHNIQUE

The present invention relates to a spirit drink and a process for its preparation.

### STATE OF THE ART

Various types of spirit drinks are known, which are substantially defined as alcoholic beverages intended for human consumption. In particular, they, by regulatory definition, have particular organoleptic characteristics and a minimum alcoholic strength of 15% vol.

Furthermore, they are generally produced by distillation, maceration or the addition of flavorings, or by mixing a spirit drink with other spirit drinks, ethyl alcohol of agricultural origin or certain distillates.

In particular, among the well-known spirits that are mixed with other components to prepare cocktails, there are for example:
- a spirit drink based on rhubarb and marketed under the name Aperol^{®},
- a spirit drink obtained from the infusion of bitter herbs, aromatic plants and fruit in a mixture of alcohol and water, and marketed under the name of Campari^{®},
- a spirit drink obtained from the infusion of elder flowers and marketed under the name of St. Germain^{®}.

To date, however, there is no "bitter" type spirit drink, ie with a distinctly or mainly bitter taste, which is completely natural. In particular, all known "bitter" type spirit drinks contain artificial substances suitably created and / or treated in the laboratory, in particular in order to give a particular color.

To date, however, there is no "bitter" type spirit drink, that is with a distinctly or mainly bitter taste, which is suitable to be offered as a drink, either on its own (ie the "ready to drink" type) or as an ingredient of a cocktail. In particular, the known "bitter" type drinks do not have an appropriate balance of taste between bitter and sweet and, therefore, in order to be consumed they must necessarily be mixed with other preparations.

Furthermore, most spirit drinks of the "bitter" type have a main base which is obtained by fermentation or distillation of cereals.

### OBJECTS OF THE INVENTION

The object of the invention is to propose a spirit drink which solves, at least in part, the drawbacks of traditional solutions.

Another object of the invention is to propose a spirit drink of the "bitter" type which is suitable to be used both alone (ie of the "ready to drink" type) and as an ingredient in a cocktail.

Another object of the invention is to propose a spirit drink of the "bitter" type which is mainly based on wine.

Another object of the invention is to propose a spirit drink which, in the mouth, has a new, improved and / or alternative taste with respect to traditional ones.

Another object of the invention is to propose a spirit drink which, in the mouth, has a balanced taste between bitter and sweet.

Another object of the invention is to propose a spirit drink that uses completely natural dyes.

Another object of the invention is to propose a spirit drink which is an alternative and improvement, in terms of both composition and organoleptic characteristics, with respect to the existing ones.

Another object of the invention is to propose a spirit drink which comprises exclusively natural ingredients.

Another object of the invention is to propose a spirit drink of accessible cost, thus allowing the possibility of its diffusion on a large scale.

Another object of the invention is to propose a process for the preparation of a spirit drink of the "bitter" type which is simple, quick and economical, as well as in line with the regulations envisaged on the subject.

### SUMMARY OF THE INVENTION

All these objects, considered both individually and in any combination thereof, and others which will result from the following description, are achieved, according to the invention, with a spirit drink with the characteristics indicated in claim 1 and with a method for its preparation with the characteristics indicated in claim 15.

According to the invention, the spirit drink comprises the following ingredients:
- a base with at least two wines,
- a plurality of aromatic plant extracts and aromatic plant tinctures,
- citrus distillates,
- natural citrus flavors,
- natural dyes,
- alcohol for food use,
- water,
- sweetener.

### DETAILED DESCRIPTION OF THE INVENTION AND OF SOME OF ITS PREFERRED EMBODIMENTS

The present invention is further clarified hereinafter in some of its preferred embodiments which are given purely by way of non-limiting example.

The spirit drink according to the invention comprises:
- a base with at least two wines, ie a base which is obtained by fermenting grapes;
- a plurality of aromatic plant extracts and aromatic plant tinctures,
- natural aromas of citrus, preferably mandarin and cedar;
- citrus distillates;
- natural dyes;
- alcohol for food use;
- water, preferably demineralized;
- sweetener.

Preferably, the spirit drink also includes:
- essential oils of plant origin, preferably neroli essential oil, and
- vanillin.

In particular, the wine base comprises a blend of a white wine and a fortified wine.

Preferably, the blend consists of about 85.5% of white wine and about 14.5% of fortified wine.

Advantageously, white wine is a wine obtained from one or more white grape varieties. Preferably, white wine comprises for the most part wine obtained from a Trebbiano grape variety.

Preferably, the fortified wine is a Marsala DOC type wine and, more preferably, it is a fine Marsala DOC wine (ie having at least one year of aging), with a golden color and semi-dry (ie with a sugar residue higher than 40gr / liter and less than 100g / liter).

Preferably, the fortified wine is obtained according to the Marsala disciplinary. Preferably, the fortified wine is obtained by fermentation and, at the end of the fermentation, ethanol of wine origin and / or wine brandy is added, and then it is aged, in particular in wooden barrels.

Advantageously, the wine base constitutes about 70-80%, preferably about 76% by weight, of the final spirit drink.

Preferably, said plurality of aromatic vegetable extracts comprises a first extract obtained from the union of several bittering botanicals with orange peel. Preferably, said first extract is obtained starting from the union of the following components: sweet orange peel, Roman wormwood, gentian, rhubarb, camedrio, aloe. Preferably, the individual components of said first extract are extracted in a single infusion.

Preferably, said plurality of aromatic vegetable extracts comprises a second extract obtained from the union of several botanicals and, more preferably, from the union of the following botanicals: cinnamon, cloves, sweet orange peel, bitter orange peel, gentian. Preferably, the individual components of said second extract are extracted in a single infusion.

Preferably, said plurality of aromatic extracts comprise at least one of the following further extracts:
- bitter orange extract
- bergamot extract
- gentle wormwood extract
- roman wormwood extract
- rhubarb extract
- quassium wood extract
- vanilla bean extract.

Preferably, said further extracts are extracted individually.

Conveniently, said extracts are obtained by extraction by maceration in hydroalcoholic solution of the vegetable raw material(s).

Conveniently, as mentioned, the vegetable raw material can be extracted individually or together with other botanicals, thus giving the final extract a more complex and structured aromatic characteristic.

Preferably, the aromatic vegetable tinctures comprise at least one of the following tinctures:
- cinnamon tincture
- ginger tincture
- cardamom tincture
- gentian tincture
- raisin tincture

Conveniently, gentian tincture is obtained from gentian root.

Conveniently, ginger tincture is made from ginger root.

Conveniently, cinnamon tincture is obtained from cinnamon sticks.

Conveniently, raisin tincture is obtained from raisins.

Conveniently, cardamom tincture is obtained from cardamom seeds.

Advantageously, the vegetable extracts and tinctures include various connotations which can be classified as follows: herbaceous / earthy / woody, citrus / fruity, spicy, bitter and sweet.

Advantageously, the vegetable extracts and tinctures are obtained from herbaceous, citrus, spicy, bitter and sweet botanicals.

Advantageously, in the spirit drink, the vegetable extracts and tinctures are about 4 - 4.5% v / v, preferably 4.2% v / v, on the final spirit drink.

Advantageously, the plant extracts are obtained by means of a maceration and subsequent filtration process. In particular, it starts from a vegetable material (grass, plants, fruits) which is macerated with alcohol and water; subsequently the macerated material is pressed and filtered, thus obtaining the vegetable extracts of the corresponding starting herbs.

The alcoholic degree for the maceration of the vegetable extracts and tinctures can vary from about 27 ° 90% vol. to about 53% vol.

Citrus distillates comprise a plurality of distillates, each of which is prepared individually and separately from the others. In particular, citrus distillates include distillates obtained from the peel / zest of orange and lemon, and from the fruits of pink grapefruit.

More in detail, the orange distillate is obtained starting from the dried peel of the fruits of the orange plants, also called Citrus sinensis.

More in detail, the lemon distillate is obtained from the dried peel of the fruits of lemon plants, also called Citrus limon.

More specifically, the pink grapefruit distillate is obtained from the fruits of grapefruit plants, also called Citrus paradisi, in the pink variant.

Advantageously, in the spirit drink, the distillates obtained from the peels / zest of the orange and lemon and from the fresh fruits of the pink grapefruit are about 1 - 1.5% v / v, preferably 1.3% v / v on the final spirit drink .

Preferably, the distillates are obtained by distillation of the extracts of the fruit peels of the orange and lemon plants and / or by distillation of the fruit extracts of the grapefruit plants, also known as Citrus paradisi, in the pink variant.

Advantageously, the distillates are obtained by maceration, filtration and subsequent distillation. In particular, we start from the dried skins of the corresponding fruit of each tree, which are macerated with alcohol and water, subsequently, the macerated material is pressed and filtered, and finally, by distillation, the distillates from the skins of the starting fruits are obtained. Preferably, the alcohol content for maceration is 50% vol. More in detail, the distillation is carried out under vacuum. The average alcohol content of the distillate thus obtained is 75% vol.

Preferably, the essential neroli oil is obtained by steam distillation, in particular by distillation with temperatures lower than the boiling temperature.

Preferably, the natural citrus flavors include flavors of mandarin and cedar and / or other citrus fruits.

Advantageously, the mandarin-based aroma is obtained starting from the mandarin peel. In particular, the mandarin-based aroma is obtained from the fruits of the Citrus reticulata plants. Preferably, the essential oils of the mandarin-based aroma are obtained by buffing or blending from the fruits of the Citrus reticulata plants. In particular, the fresh peels of the fruits of the Citrus reticulata plants are grated, preferably passing through abrasive rollers which are suitably kept constantly clean with water, in order to obtain a pulp which is then suitably pressed and / or filtered in order to obtain the essential oils of the mandarin-based aroma. Advantageously, the essential oils thus obtained are diluted in a solution of alcohol and water and, after having been suitably mixed, are refrigerated to allow the deterpenation.

Advantageously, the cedar-based aroma is obtained starting from the natural cedar peel, preferably from Sicily. In particular, the cedar-based aroma is obtained from the peel of the fruit of Citrus medica plants.

Preferably, the essential oils of the cedar-based aroma are obtained by buffing or blending the fruits of the cedar plants. In particular, the fresh peels of the fruits of Citrus medica plants are grated, preferably by passing through abrasive rollers which are suitably kept constantly clean with water, in order to obtain a pulp which is then suitably pressed and / or filtered in order to obtain the essential oils of the cedar-based aroma. Advantageously, the essential oils thus obtained are diluted in a solution of alcohol and water and, after having been suitably mixed, are refrigerated to allow the deterpenation.

Preferably, the sweetener is of the natural type. Preferably, the sweetener is sucrose - in particular it is a product of agricultural origin obtained by extraction with water from the sugar beet - and, advantageously, it is dissolved in the mixture of wine and water, to obtain a corresponding vinous syrup.

Preferably, the sweetener is dissolved in the liquid to be about 20°Bx.

Conveniently, said natural dyes include:
- plain or raw caramel, preferably of the E150A type; preferably, it is caramelized burnt sugar without the use of additives,
- extract (vegetable juice) of red potato, and
- beta-carotene.

Preferably, for 100 liters of spirit drink the following is used:
- about 0,2Kg of plain or raw caramel, preferably E150A type,
- about 0.2Kg of red potato extract, and
- about 0.01Kg of beta-carotene.

Preferably, the drink comprises about 0.41% w / v of natural dyes and, in particular, it comprises:
- 0.2% w / v of plain caramel, preferably E150A type,
- 0.2% w / v red potato juice,
- 0.01% w / v of beta-carotene.

Preferably, the red potato extract and beta-carotene are added after the clarification and filtration treatment as otherwise the clarification process would reduce and cancel the coloring exerted by the aforesaid two natural dyes. Furthermore, suitably, the characteristics of the red potato extract and beta-carotene, as well as the quantity used, do not in any way compromise the stability of the finished product, unlike caramel which - if added after clarification - could compromise the stability of the final product.

Preferably, beta-carotene is obtained by fermenting natural strains of the Blakeslea Trispora mushroom and is subsequently extracted by means of solvents and finally crystallized. In particular, beta-carotene can be classified as a natural dye since the starting raw material is natural and because its production process does not change the chemical nature of the coloring principle.

Conveniently, beta-carotene gives the drink a substantially orange color.

Preferably, the red potato extract is obtained by a non-selective aqueous extraction of the coloring pigment present in the red potato, which is then concentrated. By "non-selective extraction" we mean that the manufacturing process is configured to extract all the components of the raw material and therefore both the coloring and the aromatic part, without selecting only one of the two qualities.

Appropriately, the red potato extract confers a substantially red color.

Conveniently, the alcohol is of natural origin and, preferably, is obtained from cereals, more preferably from wheat. Conveniently, alcohol for food use can be the so-called "Alcool Buongusto" of natural origin. Conveniently the alcohol allows the final drink to reach the desired / predetermined alcoholic grade.

Conveniently, the water used in the spirit drink according to the invention is obtained by means of the reverse osmosis process;

Advantageously, in the spirit drink according to the invention the above ingredients are used according to the following quantities (which are defined in volume or weight depending on the ingredients, considering a quantity equal to 100 liters of final drink):
- about 76 liters of said wine-based blend (preferably defined by about 65 liters of white wine and about 11 liters of liqueur wine),
- about 6.77 liters of alcohol,
- approximately 4.2 liters of these aromatic plant extracts and aromatic plant tinctures,
- about 1.3 liters of these citrus fruit distillates,
- about 17 Kg. of sweetener, preferably sucrose,
- about 0, 3555 liters of natural citrus flavors,
- about 0.41 kg of said natural dyes of vegetable origin,
- the remainder of water.

Preferably, about 0.008 kg of vanillin and about 0.0005 liters of neroli essential oil are also used.

The drink according to the invention is wine-based, with a considerable bittering component but balanced by the adequate sugar content of the sweetener and by the wise dosage of sweet extracts, not immediately perceptible but useful for the balance of the formulation. Furthermore, the combination of citrus distillates and natural citrus aromas has conveniently expanded the olfactory intensity. Conveniently, the aromatic component of gentian gives the drink the typical flavors of the so-called "Americano" drink.

Conveniently, the color of the drink is completely natural, thus allowing the finished drink to be classified as a "natural product".

Conveniently, the use of vegetable juices, and in particular the choice of red potato juice, is optimal as, in addition to being natural, it is stable at acid pH, a characteristic that the finished drink has thanks to the presence of wines.

Conveniently, in the mouth the drink has a taste both bitter (deriving from the stimulation of the taste buds of the terminal / innermost part of the tongue) and sweet (deriving from the stimulation of the taste buds of the outermost part of the tongue) and, in particular, it is substantially balanced between bitter and sweet. In particular, the bitter taste of the drink, which derives from the aromatic vegetable extract including Gentian, Legno quassio and / or Aloe, is well balanced with the sweet taste that derives from vanilla essential oils and fortified wine.

Conveniently, the overall and substantially ruby red color of the drink derives mainly from the fact that only dyes of natural origin are used, and in particular beta-carotene and red potato extract.

Conveniently, the spirit drink according to the invention has an alcohol content of about 18-20% vol., preferably about 18.6% vol.

Conveniently, the spirit drink according to the invention has a sugar percentage of about 18-20%, preferably about 17%.

The drink can be served cold at around 5-7°C or even at an ambient temperature of around 20°C.

Preferably, the drink is contained and stored in a glass bottle.

Conveniently, no artificial preservatives and / or colorings are provided in the beverage according to the invention.

The process for preparing the spirit drink according to the invention is as follows.

The wine base is first prepared by mixing the white wine with the liqueur wine, as described above. In particular, preferably, the wine base is first prepared by mixing, inside a stainless steel tank equipped with a stirrer and previously sanitized, the white wine with the fortified wine.

The quantity of sweetener is then added to the vinous solution, preferably according to the following dosages per 100 liters of finished drink:
- about 76.00 liters of wine-based blend,
- about 17 Kg. of sweetener, preferably of sucrose.

When the sweetener is completely dissolved, the aromatic alcohol components are added - that is, the aromatic plant extracts, aromatic plant tinctures, citrus distillates and natural flavors - which had previously been prepared as described above.

Preferably, the natural flavors are first solubilized in alcohol.

Conveniently, before the clarification and filtration step, simple or raw caramel, preferably of the E150a type, is added.

Preferably, for 100 liters of finished drink, the following components are added:
- about 4.20 liters of aromatic plant extracts and tinctures,
- about 1.3 liters of citrus distillates,
- about 6.77 liters of alcohol, preferably cereals,
- approx.0.3555 liters of natural flavors,
- about 0,20 Kg. of plain caramel E150a,
- demineralized water.

Advantageously, the mixture thus obtained is subjected to a clarification step.

Subsequently, the clarified mixture is subjected to a filtration step.

Appropriately, the clarification takes place with the aid of natural / vegetable clarifiers, thus allowing the finished product to be suitable also for the vegan diet. Preferably, the clarifiers are bentonite and vegetable gelatin. After the slow mixing with the clarifiers, the product rests for 48 hours. This long rest of the product allows the protein colloids and tannins to settle at the bottom of the tank, clarifying and cleaning the product from impurities. Once the resting phase is completed, the clear liquid is filtered while the deposit formed is disposed of. Preferably, the filtration takes place by pressure with high porosity filtered cartons.

The clarification and filtration phases allow both the taste and color of the drink to stabilize over time, thus allowing it to be stored without the need to be refrigerated.

The clarification gives the finished product the stability necessary so that the product remains clear, eliminating the risk of clouding and eliminating the possibility of sediment formation in the finished product.

Subsequently, the remaining dyes are added to the mixture, and in particular the red potato extract and beta-carotene. Preferably, for 100 liters of finished drink, about 0.2 kg of red potato juice and about 0.01 kg of beta-carotene are added.

The resulting blend is ready to be bottled. Preferably, before bottling - for example about thirty minutes before bottling - a quantitative content of sulfur dioxide is added in order to calm and slow down the oxidation that naturally wine-based products undergo. Preferably, approximately 0.007 kg of total sulfur dioxide, equal to 70 mg / l, is added for 100 liters of finished beverage.

Finally, the mixture thus obtained is suitably subjected to a further filtration step, preferably by means of a sterile filter, in order to preserve the product from yeast contamination and with the aim of removing any residues and making it clear.

From what has been said it is clear that the spirit drink according to the invention differs from the traditional ones in that it is the only drink which at the same time is based on wine, has a bitter taste and is made exclusively with natural ingredients and, above all, the its color is obtained through the use of natural dyes.

In particular, the spirit drink according to the invention has a new taste in the mouth, improving and / or in any case alternative, with respect to traditional drinks since none of these is made either with the specific combination of ingredients or according to the corresponding specific quantities provided in the drink according to the invention.

Furthermore, the beverage according to the present invention is particularly advantageous in that it is suitable for being offered both alone (ie it is of the "ready to drink" type) and as a mixing ingredient for cocktails. In particular, unlike other alcoholic beverages, it has a balanced sweet and bitter taste, and can thus also be consumed alone.

Conveniently, the spirit drink according to the invention is wine-based and, therefore, can be considered or qualified as a wine-based flavored drink. Conveniently, the spirit drink according to the invention is not obtained from the distillation of fermented sugary or saccharified substances and, therefore, cannot be considered or qualified as a spirit and, in particular, it is not a rum.

## Claims

1. Spirit drink comprising the following ingredients:
- a base with at least two wines,
- a plurality of aromatic plant extracts and aromatic plant tinctures,
- citrus distillates,
- natural citrus flavors,
- natural dyes,
- alcohol for food use,
- water,
- sweetener,
and **characterized by** the fact that:
- these natural dyes include red potato extract and / or beta-carotene,
- said wine base is a blend of a white wine with at least one fortified wine.

2. Spirit drink according to claim 1, **characterized in that** said drink comprises, per 100 liters of final drink, the following quantities of said ingredients:
- about 76 liters of said blend of at least two wines,
- about 6.77 liters of alcohol,
- approximately 4.2 liters of these aromatic plant extracts and aromatic plant tinctures,
- about 1.3 liters of these citrus fruit distillates,
- about 17 Kg of sweetener, preferably sucrose,
- about 0, 3555 liters of said natural citrus flavors,
- about 0.41 kg of said natural dyes of vegetable origin,
- the remainder of water.

3. Spirit drink according to one or more of the preceding claims, **characterized in that** said aromatic vegetable extracts comprise at least one extract obtained from the union of several bittering botanicals with orange peel.

4. Spirit drink according to one or more of the preceding claims, **characterized in that** said tinctures comprise at least one of cinnamon tincture, ginger tincture, cardamom tincture, gentian tincture and raisin tincture.

5. Spirit drink according to one or more of the preceding claims, **characterized in that** said natural flavors include aromas of mandarin and cedar.

6. Spirit drink according to one or more of the preceding claims, **characterized in that** said citrus fruit distillates comprise a distillate obtained from the dried peels of the fruits of orange plants.

7. Spirit drink according to one or more of the preceding claims, **characterized in that** said citrus fruit distillates comprise a distillate obtained from the dried peels of the fruits of lemon trees.

8. Spirit drink according to one or more of the preceding claims, **characterized in that** said citrus fruit distillates comprise a distillate obtained from the fruits of grapefruit plants in the pink variant.

9. Spirit drink according to one or more of the preceding claims, **characterized in that**, for 100 liters of drink, the following are used:
- about 0.2 kg of plain or raw caramel, preferably E150A type,
- about 0.2 kg of red potato extract, and
- about 0.01 kg of beta-carotene.

10. Spirit drink according to one or more of the preceding claims, **characterized in that** said mixture of a white wine with at least one fortified wine consists of about 85.5% of said at least one white wine and about 14.5% of a fortified wine.

11. Spirit drink according to the preceding claim, **characterized in that**:
- said white wine is a wine obtained from one or more white grape varieties, and
- said liqueur wine is a Marsala DOC wine.

12. Spirit drink according to one or more of the preceding claims, **characterized in that**:
- have a color that is substantially red overall, preferably ruby red,
- not include any artificial dyes and / or preservatives, and
- have an alcohol content of about 18-20% vol., preferably about 18.6% vol.

13. Spirit drink according to one or more of the preceding claims, **characterized in that** it also comprises essential oils of vegetable origin, preferably neroli essential oil, and vanillin.

14. Spirit drink according to one or more of the preceding claims, **characterized in that** the wine base constitutes about 70-80%, preferably about 76% by weight, of the final spirit drink.

15. Process for preparing the spirit drink according to one or more of the preceding claims, **characterized in that** it comprises the sequence of the following steps:
- the wine base is prepared by mixing white wine with fortified wine,
- the sweetener is added to the wine base,
- when the sweetener is completely dissolved, the aromatic vegetable extracts, the aromatic vegetable dyes, the citrus distillates, the natural citrus flavors and the simple or raw caramel, preferably of the E150A type, are added, thus obtaining a mixture,
- the mixture thus obtained is clarified with clarifiers of natural origin and then filtered,
- red potato extract and beta-carotene are added to the mixture,
- sulfur dioxide is added, preferably before bottling.

## Patentansprüche

1. Spirituose mit den folgenden Inhaltsstoffen:
- eine Basis mit mindestens zwei Weinen,
- eine Vielzahl von aromatischen Pflanzenextrakten und aromatischen Pflanzentinkturen,
- Zitrusdestillate,
- natürliche Zitrusaromen,
- natürliche Farbstoffe,
- Alkohol für den Gebrauch mit Lebensmitteln,
- Wasser,
- Süßstoff,
und **dadurch gekennzeichnet, dass**:
- zu diesen natürlichen Farbstoffen gehören Rote-Kartoffel-Extrakt und / oder Beta-Carotin,
- die Weinbasis ein Verschnitt eines Weißweins mit mindestens einem gespriteten Wein ist.

2. Spirituose nach Anspruch 1, **dadurch gekennzeichnet, dass** das Getränk pro 100 Liter des Endgetränks die folgenden Mengen der Inhaltsstoffe umfasst:
- etwa 76 Liter des Verschnitts von mindestens zwei Weinen,
- etwa 6,77 Liter Alkohol,
- ca. 4,2 Liter dieser aromatischen Pflanzenextrakte und aromatischen Pflanzentinkturen,
- etwa 1,3 Liter dieser Zitrusfruchtdestillate,
- etwa 17 kg Süßstoff, vorzugsweise Saccharose,
- etwa 0,3555 Liter von natürlichen Zitrusaromen,
- etwa 0,41 kg von natürlichen Farbstoffen pflanzlichen Ursprungs,
- den Rest Wasser.

3. Spirituose nach einem oder mehreren der vorhergehenden Ansprüche, **dadurch gekennzeichnet, dass** die aromatischen Pflanzenextrakte mindestens einen Extrakt umfassen, der aus der Vereinigung mehrerer bitterer Pflanzenstoffe mit Orangenschalen gewonnen wird.

4. Spirituose nach einem oder mehreren der vorhergehenden Ansprüche, **dadurch gekennzeichnet, dass** die Tinkturen mindestens eine von Zimt-Tinktur, Ingwer-Tinktur, Kardamom-Tinktur, Enzian-Tinktur und Rosinen-Tinktur umfassen.

5. Spirituose nach einem oder mehreren der vorhergehenden Ansprüche, **dadurch gekennzeichnet, dass** die natürlichen Aromen Aromen von Mandarine und Zeder beinhalten.

6. Spirituose nach einem oder mehreren der vorhergehenden Ansprüche, **dadurch gekennzeichnet, dass** die Zitrusfruchtdestillate ein Destillat umfassen, das aus den getrockneten Schalen der Früchte von Orangenpflanzen gewonnen wird.

7. Spirituose nach einem oder mehreren der vorhergehenden Ansprüche, **dadurch gekennzeichnet, dass** die Zitrusfruchtdestillate ein Destillat umfassen, das aus den getrockneten Schalen der Früchte von Zitronenbäumen gewonnen wird.

8. Spirituose nach einem oder mehreren der vorhergehenden Ansprüche, **dadurch gekennzeichnet, dass** die Zitrusfruchtdestillate ein Destillat umfassen, das aus den Früchten von Grapefruitpflanzen in der rosa Variante gewonnen wird.

9. Spirituose nach einem oder mehreren der vorhergehenden Ansprüche, **dadurch gekennzeichnet, dass** für 100 Liter Getränk Folgendes verwendet wird:
- etwa 0,2 kg reines oder rohes Karamell, vorzugsweise Typ E150A,
- etwa 0,2 kg Rote-Kartoffel-Extrakt und
- etwa 0,01 kg Beta-Carotin.

10. Spirituose nach einem oder mehreren der vorhergehenden Ansprüche, **dadurch gekennzeichnet, dass** die Mischung eines Weißweins mit mindestens einem gespriteten Wein aus etwa 85,5 % des mindestens einen Weißweins und etwa 14,5 % eines gespriteten Weins besteht.

11. Spirituose nach dem vorhergehenden Anspruch, **dadurch gekennzeichnet, dass**:
- der Weißwein ein Wein ist, der aus einer oder mehreren weißen Rebsorten gewonnen wird, und
- der Likörwein ein Marsala DOC-Wein ist.

12. Spirituose nach einem oder mehreren der vorhergehenden Ansprüche, **dadurch gekennzeichnet, dass**:
- sie eine insgesamt im Wesentlichen rote, vorzugsweise rubinrote Farbe aufweisen,
- keine künstlichen Farb- und / oder Konservierungsstoffe beinhalten und
- einen Alkoholgehalt von ca. 18-20 Vol.- %, vorzugsweise ca. 18,6 Vol.- % aufweisen.

13. Spirituose nach einem oder mehreren der vorhergehenden Ansprüche, **dadurch gekennzeichnet, dass** sie auch ätherische Öle pflanzlichen Ursprungs, vorzugsweise ätherisches Neroliöl, und Vanillin umfasst.

14. Spirituose nach einem oder mehreren der vorhergehenden Ansprüche, **dadurch gekennzeichnet, dass** die Weinbasis etwa 70-80 Gew.- %, vorzugsweise etwa 76 Gew.- % der Endspirituose ausmacht.

15. Verfahren zur Herstellung der Spirituose nach einem oder mehreren der vorhergehenden Ansprüche, **dadurch gekennzeichnet, dass** es die Abfolge der folgenden Schritte umfasst:
- die Weinbasis durch Mischen von Weißwein mit gespritetem Wein hergestellt wird,
- der Süßstoff der Weinbasis zugesetzt wird,
- wenn der Süßstoff vollständig aufgelöst ist, werden die aromatischen Pflanzenextrakte, die aromatischen Pflanzenfarbstoffe, die Zitrusdestillate, die natürlichen Zitrusaromen und das einfache oder rohe Karamell, vorzugsweise vom Typ E150A, zugegeben, wodurch eine Mischung erhalten wird,
- die so gewonnene Mischung mit Klärmitteln natürlichen Ursprungs geklärt und anschließend filtriert wird,
- der Mischung werden Rote-Kartoffel-Extrakt und Beta-Carotin zugesetzt,
- Schwefeldioxid wird zugesetzt, vorzugsweise vor der Abfüllung.

## Revendications

1. Boisson spiritueuse comprenant les ingrédients suivants :
- une base avec au moins deux vins,
- une pluralité d'extraits de plantes aromatiques et de teintures de plantes aromatiques,
- des distillats d'agrumes,
- des arômes naturels d'agrumes,
- des colorants naturels,
- de l'alcool à usage alimentaire,
- de l'eau,
- un édulcorant,
et **caractérisée par le fait que** :
- ces colorants naturels comprennent l'extrait de pomme de terre rouge et/ou le bêta-carotène,
- ledit vin de base est un mélange de vin blanc et d'au moins un vin muté.

2. Boisson spiritueuse selon la revendication 1, **caractérisée en ce que** ladite boisson comprend, pour 100 litres de boisson finale, les quantités suivantes desdits ingrédients :
- environ 76 litres dudit mélange d'au moins deux vins,
- environ 6,77 litres d'alcool,
- environ 4,2 litres de ces extraits de plantes aromatiques et teintures de plantes aromatiques,
- environ 1,3 litre de ces distillats d'agrumes,
- environ 17 kg d'édulcorant, de préférence du saccharose,
- environ 0, 3555 litre desdits arômes naturels d'agrumes,
- environ 0,41 kg desdits colorants naturels d'origine végétale,
- le reste d'eau.

3. Boisson spiritueuse selon l'une ou plusieurs des revendications précédentes, **caractérisée en ce que** lesdits extraits végétaux aromatiques comprennent au moins un extrait obtenu à partir de l'union de plusieurs plantes amères avec de l'écorce d'orange.

4. Boisson spiritueuse selon l'une ou plusieurs des revendications précédentes, **caractérisée en ce que** lesdites teintures comprennent au moins une des teintures suivantes : teinture de cannelle, teinture de gingembre, teinture de cardamome, teinture de gentiane et teinture de raisin sec.

5. Boisson spiritueuse selon l'une ou plusieurs des revendications précédentes, **caractérisée en ce que** lesdits arômes naturels comprennent des arômes de mandarine et de cèdre.

6. Boisson spiritueuse selon l'une ou plusieurs des revendications précédentes, **caractérisée en ce que** lesdits distillats d'agrumes comprennent un distillat obtenu à partir des écorces séchées des fruits d'orangers.

7. Boisson spiritueuse selon l'une ou plusieurs des revendications précédentes, **caractérisée en ce que** lesdits distillats d'agrumes comprennent un distillat obtenu à partir des écorces séchées des fruits de citronniers.

8. Boisson spiritueuse selon l'une ou plusieurs des revendications précédentes, **caractérisée en ce que** lesdits distillats d'agrumes comprennent un distillat obtenu à partir des fruits de pamplemoussiers dans la variante rose.

9. Boisson spiritueuse selon l'une ou plusieurs des revendications précédentes, **caractérisée en ce que**, pour 100 litres de boisson, les éléments suivants sont utilisés :
- environ 0,2 kg de caramel ordinaire ou brut, de préférence de type E150A,
- environ 0,2 kg d'extrait de pomme de terre rouge, et
- environ 0,01 kg de bêta-carotène.

10. Boisson spiritueuse selon l'une ou plusieurs des revendications précédentes, **caractérisée en ce que** le mélange d'un vin blanc et d'au moins un vin muté se compose d'environ 85,5 % dudit au moins un vin blanc et d'environ 14,5 % d'un vin muté.

11. Boisson spiritueuse selon la revendication précédente, **caractérisée en ce que** :
- ledit vin blanc est un vin obtenu à partir d'une ou de plusieurs variétés de raisins blancs, et
- ledit vin de liqueur est un vin Marsala AOC.

12. Boisson spiritueuse selon l'une ou plusieurs des revendications précédentes, **caractérisée en ce que** :
- elle a une couleur dans l'ensemble sensiblement rouge, de préférence rouge rubis,
- elle ne contient pas de colorants artificiels et/ou de conservateurs, et
- a une teneur en alcool d'environ 18-20 % en vol. et de préférence d'environ 18,6 % en vol.

13. Boisson spiritueuse selon l'une ou plusieurs des revendications précédentes, **caractérisée en ce qu'**elle comprend également des huiles essentielles d'origine végétale, de préférence l'huile essentielle de néroli, et de la vanilline.

14. Boisson spiritueuse selon l'une ou plusieurs des revendications précédentes, **caractérisée en ce que** la base de vin constitue environ 70-80 %, de préférence environ 76 % en poids, de la boisson spiritueuse finale.

15. Procédé de préparation de la boisson spiritueuse selon l'une ou plusieurs des revendications précédentes, **caractérisé en ce qu'**il comprend la séquence des étapes suivantes :
- le vin de base est préparé en mélangeant du vin blanc avec du vin muté,
- l'édulcorant est ajouté à la base de vin,
- lorsque l'édulcorant est complètement dissous, on ajoute les extraits végétaux aromatiques, les colorants végétaux aromatiques, les distillats d'agrumes, les arômes naturels d'agrumes et le caramel ordinaire ou brut, de préférence du type E150A, ce qui permet d'obtenir un mélange,
- le mélange ainsi obtenu est clarifié à l'aide de clarificateurs d'origine naturelle puis filtré,
- de l'extrait de pomme de terre rouge et du bêta-carotène sont ajoutés au mélange,
- du dioxyde de soufre est ajouté, de préférence avant la mise en bouteille.
